# EUROPEAN PATENT APPLICATION

(11) **EP 4 255 065 A1**
(43) Date of publication of application: **04.10.2023**
(21) Application number: 20962825.4
(22) Date of filing: 26.11.2020
(51) Int. Cl.: H04W 72/04

(54) **SIGNAL TRANSMISSION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2020/131821
(87) International publication number: WO 2022/109934

(57) **Abstract**

The present application relates to the technical field of wireless communications, and provides a signal transmission method and apparatus. The solution comprises: sending configuration information, the configuration information comprising candidate resources; receiving a signal on a target resource among the candidate resources; and sending a feedback signal on a target beam corresponding to the target resource. In the present application, a base station can send configuration information comprising candidate resources, receive a signal on a target resource among the candidate resources, and send a feedback signal on a target beam corresponding to the target resource, thereby improving the feedback signal sending reliability of the base station.

## Description

### TECHNICAL FIELD

The disclosure relates to the field of mobile communication, in particular to a signal transmission method and a signal transmission apparatus.

### BACKGROUND

In the related art, when a base station configures uplink resources for a user terminal, due to the fact that the downlink transmission beam of the base station may scan and send at different spatial positions at different time points, the base station may be unclear on which beam the user terminal will receive a feedback signal when receiving the uplink resources sent by the user terminal, thus the base station is unable to accurately send a downlink feedback signal to the user terminal, which may result in the user terminal being unable to receive the downlink feedback signal.

### SUMMARY

A signal transmission method, a signal transmission apparatus, an electronic device and a storage medium provided by the disclosure are used to address the problem that the base station is unable to accurately send the downlink feedback signal to the user terminal in the related art.

A first aspect of embodiments of the disclosure provides a signal transmission method, performed by a base station. The method includes: sending configuration information, wherein the configuration information comprises candidate resources; receiving a signal on a target resource among the candidate resources; and sending a feedback signal on a target beam corresponding to the target resource.

A second aspect of embodiments of the disclosure provides another signal transmission method, performed by a user terminal. The method includes: selecting a target beam from candidate beams based on a configuration of candidate resources, a configuration of candidate beams and a configuration of a correspondence relationship between the candidate resources and the candidate beams; determining a candidate resource corresponding to the target beam as a target resource according to the correspondence relationship; and sending a signal on the target resource.

A third aspect of embodiments of the disclosure provides a signal transmission apparatus, implemented by a base station. The apparatus includes: a first sending module, configured to send configuration information, wherein the configuration information comprises candidate resources; a receiving module, configured to receive a signal on a target resource among the candidate resources; and a second sending module, configured to send a feedback signal on a target beam corresponding to the target resource.

A fourth aspect of embodiments of the disclosure provides a signal transmission apparatus, implemented by a user terminal. The apparatus includes: a selecting module, configured to select a target beam from candidate beams based on a configuration of candidate resources, a configuration of candidate beams and a configuration of a correspondence relationship between the candidate resources and the candidate beams; a determining module, configured to determine a candidate resource corresponding to the target beam as a target resource according to the correspondence relationship; and a third sending module, configured to send a signal on the target resource.

A fifth aspect of embodiments of the disclosure provides a base station, including the signal transmission apparatus according to the third aspect of embodiments of the disclosure.

A sixth aspect of embodiments of the disclosure provides a user terminal, including the signal transmission apparatus according to the fourth aspect of embodiments of the disclosure.

A seventh aspect of embodiments of the disclosure provides an electronic device. The electronic device includes: at least one processor, and a memory communicatively connected to the at least one processor. The memory is stored with instructions executable by the at least one processor that, when executed by the at least one processor, cause the at least one processor to execute the signal transmission method according to the first aspect of embodiments of the disclosure, or the signal transmission method according to the second aspect of embodiments of the disclosure.

An eighth aspect of embodiments of the disclosure provides a computer storage medium. The computer storage medium has computer instructions executable by a computer stored thereon. When the computer instructions executable by the computer is executed by a processor, the signal transmission method according to the first aspect of embodiments of the disclosure or the signal transmission method according to the second aspect of embodiments of the disclosure is implemented.

### BRIEF DESCRIPTION OF THE DRAWINGS

The above and/or additional aspects and advantages of the disclosure will become apparent and easily understood from the following description of embodiments with reference to the accompanying drawings, in which:
FIG. 1 is a flowchart of a signal transmission method according to an embodiment of the disclosure.
FIG. 2 is a flowchart of a signal transmission method according to another embodiment of the disclosure.
FIG. 3 is a schematic diagram of configuring indexes of candidate resources in a signal transmission method according to another embodiment of the disclosure.
FIG. 4 is a schematic diagram of configuring indexes of candidate resources in a signal transmission method according to another embodiment of the disclosure.
FIG. 5 is a schematic diagram of configuring indexes of candidate resources in a signal transmission method according to another embodiment of the disclosure.
FIG. 6 is a schematic diagram of configuring indexes of candidate resources in a signal transmission method according to another embodiment of the disclosure.
FIG. 7 is a flowchart of a signal transmission method according to another embodiment of the disclosure.
FIG. 8 is a flowchart of a signal transmission method according to another embodiment of the disclosure.
FIG. 9 is a block diagram of a signal transmission apparatus according to an embodiment of the disclosure.
FIG. 10 is a block diagram of a signal transmission apparatus according to another embodiment of the disclosure.
FIG. 11 is a block diagram of an electronic device according to an embodiment of the disclosure.

### DETAILED DESCRIPTION

Embodiments of the disclosure are described in detail below, and examples of the embodiments are shown in accompanying drawings, in which the same or similar numbers indicate the same or similar components or components having the same or similar functions throughout the descriptions. The embodiments described below with reference to the accompanying drawings are exemplary, and are intended to be used to explain the disclosure and are not to be construed as limiting the disclosure.

The specific description of a base station and a user terminal involved in the embodiments of the disclosure is as follows. The base station is deployed in a wireless access network to provide wireless access functions for the user terminal. The base station can wirelessly communicate with the user terminal through one or more antennas. The base station can provide communication coverage for a geographical area where the base station is. The base station can include different types such as macro base stations, micro base stations, relay stations, access points, etc. In some embodiments, the base station may be referred to by those skilled in the art as a base station transceiver, a wireless base station, an access point, a wireless transceiver, a basic service set (BSS), an extended service set (ESS), a node B (NodeB), an evolved NodeB (eNB or eNodeB), or other appropriate terminology. For example, in a 5G system, the base station is referred to as a gNB. For the convenience of description, in the embodiments of the disclosure, the devices that provide wireless communication functions for the user terminal are collectively referred to as base stations.

User terminals can be dispersed throughout an entire mobile communication system, and each user terminal can be stationary or mobile. The user terminals can also be referred to, by those skilled in the art, as mobile stations, user stations, mobile units, user units, wireless units, remote units, mobile devices, terminal devices, wireless devices, wireless communication devices, remote devices, mobile user stations, access user devices, mobile user devices, wireless user devices, remote user stations, handheld devices, user agents, mobile clients, clients or some other appropriate terminology. The user terminal can be a cellular phone, a personal digital assistant (PDA), a wireless modem, a wireless communication device, a handheld device, a tablet computer, a laptop computer, a cordless telephone, a wireless local loop (WLL) station, etc., and can communicate with the base station in the mobile communication system.

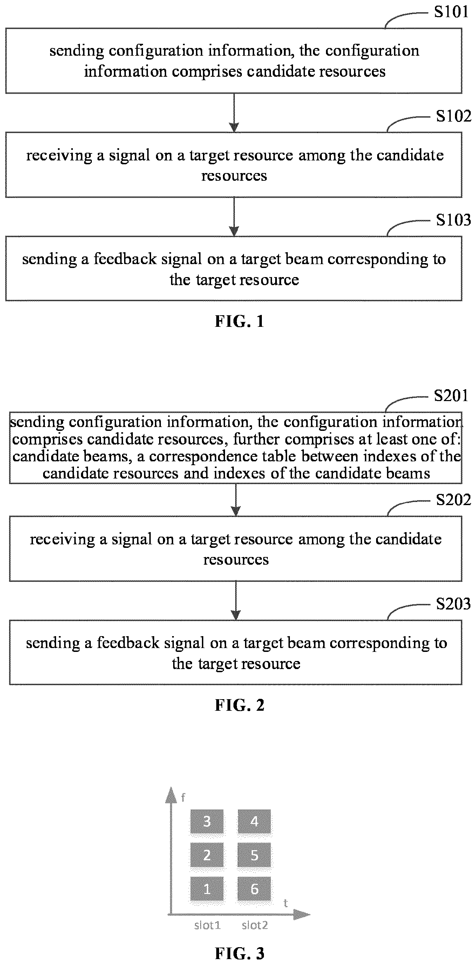

FIG. 1 is a flowchart of a signal transmission method according to an embodiment of the disclosure. The signal transmission method is performed by a base station (BS), as illustrated in FIG. 1, the signal transmission method includes following steps.

S101, configuration information is sent, the configuration information includes candidate resources.

In some embodiments of the disclosure, the base station may send the configuration information to the user terminal. The configuration information includes the candidate resources. It should be noted that the candidate resources are uplink resources used by the user terminal to send signaling and/or information to the base station. It can be understood that the candidate resources can be one or more.

Optionally, the configuration information also includes at least one of the following: candidate beams, a correspondence table between the candidate resources and the candidate beams, an identification of a corresponding method between the candidate resources and the candidate beams.

In an embodiment, the base station can pre configure the candidate beams, the correspondence table between the candidate resources and the candidate beams, and the identification of the corresponding method between the candidate resources and the candidate beams, and can send at least one of the three types of information configured above, as well as the candidate resources, as the configuration information to the user terminal. As another possible implementation, the user terminal may pre configure at least one of: the candidate beams, the corresponding method, and a calculation equation for configuring correspondence relationships.

It can be understood that both the candidate resources and the candidate beams are one or more. There is correspondence relationships between the candidate resources and the candidate beams, and each candidate resource corresponds to a candidate beam. For multiple candidate resources in each resource allocation cycle, a candidate beam can correspond to one or more candidate resources. For example, there are 4 candidate resources in a 10ms resource allocation cycle. If there are 4 candidate beams, each candidate beam can correspond to 1 candidate resource. If there are 2 candidate beams, each candidate beam can correspond to 2 candidate resources.

Optionally, configuring the correspondence table between the candidate resources and the candidate beams may include at least one of the following,

Method 1: the correspondence table between the candidate resources and the candidate beams is configured using a preset corresponding method according to the candidate resources, the candidate beams, and the corresponding method.

In an embodiment, one corresponding method is preset in the user terminal, and the correspondence table between the candidate resources and the candidate beams can be configured using the preset corresponding method.

Alternatively, multiple corresponding methods are preset in the user terminal, and based on an identification of a corresponding method sent by the base station, a corresponding method can be obtained from the preset multiple calculation equations, and the corresponding method corresponding to the identification can be used to configure the correspondence table between the candidate resources and the candidate beams.

Method 2: the correspondence table between the candidate resources and the candidate beams is configured using a calculation equation corresponding to a preset corresponding method according to the candidate resources, the candidate beams, and the corresponding method.

In an embodiment, a calculation equation corresponding to one corresponding method is preset in the user terminal, the correspondence table between the candidate resources and the candidate beams can be configured using the calculation equation corresponding to the preset corresponding method.

Alternatively, calculation equations corresponding to multiple corresponding methods are preset in the user terminal, based on an identification of a corresponding method sent by the base station, a calculation equation corresponding to the corresponding method that corresponds to the identification can be obtained from the preset multiple calculation equations, and the correspondence table between the candidate resources and the candidate beams is configured using the calculation equation corresponding to the corresponding method that corresponds to the identification.

The above preset corresponding method and its corresponding calculation equation include but are not limited to the following three or two forms.

For example, the corresponding method is to interleave and allocate the candidate resources in the candidate beams. A derivation process of the corresponding calculation equation is as follows. A total number of candidate resources in a resource allocation cycle is N, and the candidate resources are numbered from 0 to N-1. A total number of the beams is M, and the beams are numbered from 0 to M-1. The number of resources allocated to each beam is N/M. A resource index allocated for the i-th beam is i+M*j, and a value range of j is [0, (N/M)-1].

For example, the corresponding method is to evenly allocate the candidate resources among the candidate beams. A derivation process of the corresponding calculation equation is as follows. A total number of candidate resources in a resource allocation cycle is N, and the candidate resources are numbered from 1 to N. A total number of the beams is M, and the beams are numbered from 1 to M. The number of resources allocated to each beam is N/M. The resource index allocated for the i-th beam is [1+(i-1)^{∗}(N/M), 1+(i-1)^{∗}(N/M)+ ((N/M)-1)].

For example, the corresponding method is to evenly allocate the candidate resources among the candidate beams. A derivation process of another corresponding calculation equation is as follows. A total number of candidate resources in a resource allocation cycle is N, and the candidate resources are numbered from 0 to N-1. A total number of the beams is M, and the beams are numbered from 0 to M-1. The number of resources allocated to each beam is N/M. The resource index allocated for the i-th beam is [i^{∗}(N/M), i^{∗}(N/M)+((N/M)-1)].

Optionally, the candidate beams can be configured through a broadcast message, and the candidate resources and the above correspondence relationship can be configured through exclusive signaling of the user terminal, the exclusive signaling can be radio resource control (RRC) signaling.

Optionally, the configuration information also includes at least one of: a type of the candidate resources, user terminal states corresponding to the candidate resources, or resource configuration information of the candidate resources.

The type of the candidate resources includes at least one of the following types: a data channel, a control channel, and a detection signal. For example, the data channel can include a Physical Uplink Shared Channel (PUSCH), the control channel can include a Physical Uplink Control Channel (PUCCH), and the detection signal can include a Sounding Reference Signal (SRS). It should be noted that when a candidate resource is an uplink control channel, an uplink transmission resource of the user terminal is uplink configured authorization (CG) configured by the network.

The states of the user terminal corresponding to the candidate resources can include an idle (IDLE) state and an inactive state (INACTIVE).

The resource configuration information includes at least one of the following information: a resource allocation cycle, a frequency domain resource location, a time domain starting resource location, the number of resources in resource allocation cycle, a time domain interval between adjacent resources, and a frequency interval between adjacent resources. It should be noted that the frequency domain resource location includes but is not limited to a cell identification, a bandwidth part (BWP) identification, etc.

Optionally, the configuration information may also include identifications of the candidate beams. The identification of the candidate beam includes at least one of a Synchronous Signal Block (SSB) identification and a Channel State Information Reference Signal (CSI-RS) identification.

S 102, a signal is received on a target resource among the candidate resources.

In some embodiments of the disclosure, the user terminal may determine the target resource from the candidate resources in the configuration information, and then send a signal on the target resource. Furthermore, the base station may receive the signal sent by the user terminal on the target resource.

Optionally, when the configuration information also includes the correspondence table between the candidate resources and the candidate beams, the target resource is a candidate resource corresponding to a target beam in the candidate beams. Regarding how the user terminal determines the target resource from the candidate resources in the configuration information, reference may be made to relevant content of implementation at the user terminal side, which is not limited herein.

S 103, a feedback signal is sent on a target beam corresponding to the target resource.

In an embodiment of the disclosure, the target resource is one of the candidate resources, and the target beam is one of the candidate beams.

In an embodiment of the disclosure, the base station can pre-configure a corresponding method between the candidate resources and the candidate beams, the corresponding method can be a correspondence table between the candidate resources and the candidate beams, or a preset calculation equation, through which the correspondence relationship between the candidate resources and the candidate beams can be obtained. For example, there is a correspondence table between the candidate resources and the candidate beams is built in the base station side. By bringing the target resource into the correspondence table, the target beam is obtained and a feedback signal is sent on the target beam. For example, a corresponding method for the candidate resources and the candidate beams may be built in the base station side, which includes a preset calculation equation. By using the corresponding method or the calculation equation, the correspondence table between the candidate resources and the candidate beams can be obtained, and the target beam can be obtained by bringing the target resource into the correspondence table.

In some embodiments of the disclosure, the base station may send the feedback signal to the user terminal on the target beam corresponding to the target resource.

In related art, when the base station configures uplink resources for the user terminal, due to the fact that the downlink transmission beam of the base station may scan and send at different spatial positions at different time points, when the base station receives the uplink resources sent by the user terminal, the base station is unclear on which beam the user terminal may receive the feedback signal, thus the base station is unable to accurately send a downlink feedback signal to the user terminal, which may result in that the user terminal is unable to receive the downlink feedback signal.

In this embodiment, the configuration information is sent, which includes the candidate resources, the signals on the target resource in the candidate resources is received, and the feedback signal is sent on the target beam corresponding to the target resource. In this way, the base station can send the configuration information including the candidate resources, receive the signal on the target resource in the candidate resources, and send the feedback signal on the target beam corresponding to the target resource, improving the reliability of the base station's feedback signal transmission.

FIG. 2 is a flowchart of a signal transmission method according to another embodiment of the disclosure, which is performed by a base station. As illustrated in FIG.2, the signal transmission method includes the following steps.

S201, configuration information is sent, the configuration information includes candidate resources, and further includes at least one of: candidate beams, or a correspondence table between indexes of the candidate resources and indexes of the candidate beams.

In some embodiments of the disclosure, the correspondence table between the candidate resources and the candidate beams includes: the correspondence table between the indexes of the candidate resources and the indexes of the candidate beams.

It can be understood that the base station can configure the correspondence table between the indexes of the candidate resources and the indexes of the candidate beams before sending the configuration information. Following two possible implementation ways can be included.

Method 1: the number of groups is determined based on the number of the candidate beams, consecutively numbered candidate resources are classified into the same group, and indexes of candidate resources in the same group correspond to an index of the same candidate beam, to obtain the correspondence table between the indexes of the candidate resources and the indexes of the candidate beams.

For example, the number of the candidate resources is 8, the number of the groups can be determined to be 2. Candidate resources numbered 1 to 4 are divided into group 1, candidate resources numbered 5 to 8 are divided into group 2, the candidate resources numbered 1 to 4 in group 1 correspond to candidate beam 1, and the candidate resources numbered 5 to 8 in group 2 correspond to candidate beam 2.

Method 2: the number of groups is determined based on the number of the candidate beams, interleaved grouping is performed on sequentially numbered candidate resources according to indexes of the groups, and indexes of candidate resources in the same group correspond to an index of the same candidate beam to obtain the correspondence table between the indexes of the candidate resources and the indexes of the candidate beams.

For example, the number of the candidate resources is 9, the number of the groups can be determined to be 2. Candidate resources numbered 1, 3, 5, 7, and 9 are divided into group 1, and candidate resources numbered 2, 4, 6, and 8 are divided into group 2. The candidate resources numbered 1, 3, 5, 7, and 9 in group 1 correspond to candidate beam 1, and the candidate resources numbered 2, 4, 6, and 8 in group 2 correspond to candidate beam 2.

In some embodiments of the disclosure, in order to distinguish multiple candidate resources within the same resource allocation cycle, different candidate resources in the resource allocation cycle differ in terms of at least one of a time domain resource, a frequency domain resource and a demodulation signal. The time domain resources can include time slots (SLOTs), the frequency domain resources can include physical resource blocks (PRBs), and the demodulation signals can include demodulation reference signals (DMRS).

In this case, configuring the indexes of the candidate resources can include performing at least one of time domain numbering, frequency domain numbering, and demodulation signal numbering on the candidate resources.

A numbering order of the at least one of the time domain numbering, the frequency domain numbering, and the demodulation signal numbering is determined by a network configuration, or by a numbering rule specified by a network configuration or a protocol.

For example, the time domain numbering can be numbering in a chronological order or in a reverse chronological order. For example, if the time domain numbering is numbering in the chronological order, an index of a candidate resource with a time slot being 1 is smaller than that of a candidate resource with a time slot being 2. Conversely, if the time domain numbering is numbering in the reverse chronological order, the index of the candidate resource with the time slot being 1 is greater than that of the candidate resource with the time slot being 2.

For example, the frequency domain numbering can be numbering in an ascending order of frequency values or in a descending order of the frequency values. For example, the frequency domain numbering is numbering in the ascending order of the frequency values, then an index of a candidate resource with a physical resource block PRB being 1 is smaller than an index of a candidate resource with a physical resource block PRB being 2. Conversely, the frequency domain numbering is numbering in the descending order of the frequency values, then the index of the candidate resource with the physical resource block PRB being 1 is greater than the index of the candidate resources with the physical resource block PRB being 2.

Configuring the indexes of the candidate resources, such as performing a combining numbering of the time domain numbering and the frequency domain numbering on the candidate resources, may include following two possible implementation ways.

Method 1: the time domain numbering precedes the frequency domain numbering.

Optionally, a next resource of the last frequency domain resource in a current time domain is an unnumbered resource that is closest to the last frequency domain resource in terms of both time position and frequency. For example, as shown in FIG. 3, frequency domain resources with time slot being 1 are resources 1 to 3, thus the last frequency domain resource with time slot being 1 is resource 3, and the next resource is the resource that is closest to resource 3 in terms of both time position and frequency and has not been numbered yet, it is determined as resource 4, thus the frequency domain resources of time slot 2 are resources 4 to 6.

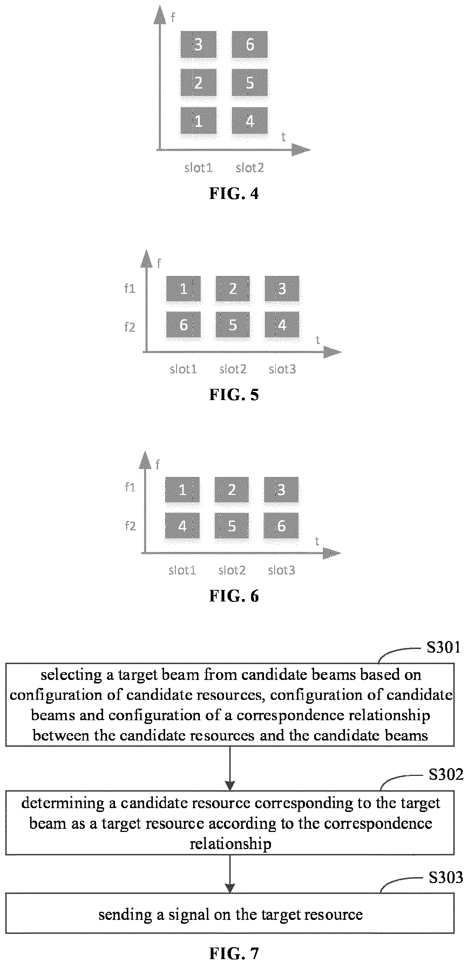

Alternatively, indexes of the frequency domain resources within the same time domain are numbered in an ascending order of frequency values or in a descending order of the frequency values. For example, as shown in FIG. 4, the indexes of the frequency domain resources with time slot being 1 are numbered in a descending order of frequency values, numbered from 1 to 3. The indexes of the frequency domain resources with time slot being 2 are numbered in a descending order of frequency values, numbered from 4 to 6.

Method 2: the frequency domain numbering precedes the time domain numbering.

Optionally, a next resource of the last time domain resource in a current frequency domain is an unnumbered resource that is closest to the last time domain resource in terms of both frequency position and time. For example, as shown in FIG. 5, time domain resources with frequency being f1 are 1 to 3, thus the last time domain resource with frequency being f1 is resource 3, and the next resource is the resource that is closest to resource 3 in terms of both frequency position and time and has not been numbered yet, it is determined as resource 4. Therefore, the time domain resources with frequency being f2 are resources 4 to 6.

Alternatively, indexes of the time domain resources within the same frequency domain can be numbered in a chronological order or in a reverse chronological order. For example, as shown in FIG. 6, the time domain resources with frequency being f1 are numbered in the chronological order, numbered from 1 to 3. The time domain resources with frequency being f2 are numbered in the chronological order, numbered from 4 to 6.

S202, a signal is received on a target resource among the candidate resources.

S203, a feedback signal is sent on the target beam corresponding to the target resource.

In the embodiments of the disclosure, steps S202 and S203 can be implemented in any way in the embodiments of the disclosure, which is not limited and elaborated in the embodiments of the disclosure.

In this embodiment, the configuration information is sent, which includes the candidate resources and further includes at least one of: the candidate beams, or the correspondence table between the indexes of the candidate resources and the indexes of the candidate beams. The signal on the target resource is received and the feedback signal is sent on the target beam corresponding to the target resource. Therefore, the base station can determine the target beam corresponding to the target resource based on the correspondence table between the indexes of the candidate resources and the indexes of the candidate beams, and send the feedback signal on the target beam corresponding to the target resource, improving the reliability of downlink feedback signal transmission.

It can be understood that when a type of the candidate resources is a data channel, indexes of hybrid automatic repeat request (HABQ) processes of the candidate resources in the resource allocation cycle are the same, or indexes of hybrid automatic repeat request processes of all configured candidate resources are the same.

When the indexes of the hybrid automatic repeat request processes of the candidate resources in the resource allocation cycle are the same, the indexes of the hybrid automatic repeat request processes of the candidate resources in the resource allocation cycle are determined according to an index of a hybrid automatic repeat request process of any of: a candidate resource earliest in a time domain, a candidate resource latest in the time domain, a candidate resource with a maximum frequency, a candidate resource with a minimum frequency, a candidate resource with a maximum index and a candidate resource with a minimum index in the resource allocation cycle.

FIG. 7 is a flowchart of a signal transmission method according to another embodiment of the disclosure. The method is performed by a user terminal. As illustrated in FIG. 7, the signal transmission method includes the following steps.

S301, a target beam is selected from candidate beams based on a configuration of candidate resources, a configuration of candidate beams and a configuration of a correspondence relationship between the candidate resources and the candidate beams.

In an embodiment of the disclosure, the user terminal may receive configuration information sent by a base station. The configuration information includes the candidate resources. The configuration information may also include at least one of the candidate beams, a correspondence table between the candidate resources and the candidate beams, and an identification of a corresponding method between the candidate resources and the candidate beams.

In some embodiments of the disclosure, the user terminal may self-configure at least one of the candidate beams, the corresponding method between the candidate resources and the candidate beams, a calculation equation for configuring the correspondence relationship, or the user terminal may receive the configuration information sent by the base station, the configuration information including at least one of: the candidate beams, the correspondence table between the candidate resources and the candidate beams, or the identification of the corresponding method between the candidate resources and the candidate beams.

It can be understood that both the candidate resources and the candidate beams are one or more. There is correspondence relationships between the candidate resources and the candidate beams, and each candidate resource corresponding to a candidate beam.

Optionally, configuring the correspondence relationship between the candidate resources and the candidate beams can include at least one of the following.

Method 1: the correspondence relationship between the candidate resources and the candidate beams is configured using a preset corresponding method according to the candidate resources, the candidate beams, and the corresponding method.

In an embodiment, one corresponding method is preset in the user terminal, and the correspondence relationship between the candidate resources and the candidate beams can be configured using the preset corresponding method.

Alternatively, multiple corresponding methods are preset in the user terminal, and based on an identification of a corresponding method sent by the base station, a corresponding method can be obtained from the multiple preset corresponding methods, and the corresponding method corresponding to the identification can be used to configure the correspondence relationship between the candidate resources and the candidate beams.

Method 2: the correspondence relationship between the candidate resources and the candidate beams is configured using a calculation equation corresponding to a preset corresponding method according to the candidate resources, the candidate beams, and the corresponding method.

In an embodiment, a calculation equation corresponding to a corresponding method is preset in the user terminal, a correspondence table between the candidate resources and the candidate beams can be configured using the preset calculation equation corresponding to the corresponding method.

Alternatively, multiple calculation equations corresponding to multiple corresponding methods are preset in the user terminal, based on an identification of a corresponding method sent by the base station, a calculation equation corresponding to the corresponding method that corresponds to the identification can be obtained from the preset multiple calculation equations, and the correspondence relationship between the candidate resources and the candidate beams is configured using the calculation equation corresponding to the corresponding method that corresponds to the identification.

Optionally, when the configuration information sent by a network side only includes candidate resources, the user terminal detects the number of reference signals corresponding to downlink beams and numbers the downlink beams according to a rule provided by a protocol based on the number of reference signals. For example, the user terminal detects that one SSB burst contains four SSB signals (for example, the four SSB signals are numbered SSB 1/2/3/4 in chronological order), then the user terminal determines that the number of downlink beams is four, and these four SSB signals correspond to four different beams, then beam 1 corresponds to SSB1, beam 2 corresponds to SSB2, and so on. The four beams corresponding to SSB1, SSB2, SSB3, and SSB4 are candidate beams. The user terminal obtains a correspondence table between candidate resources and the candidate beams based on the candidate resources configured by the network, the detected candidate beams, and a preset corresponding method or a calculation equation between of the candidate resources and the candidate beams.

The above preset corresponding method and its corresponding calculation equation include but are not limited to the following three forms.

For example, the corresponding method is to interleave and allocate the candidate resources in the candidate beams. A derivation process of the corresponding calculation equation is as follows. A total number of candidate resources in a resource allocation cycle is N, and the candidate resources are numbered from 0 to N-1. A total number of the beams is M, and the beams are numbered from 0 to M-1. The number of resources allocated to each beam is N/M. A resource index allocated for the i-th beam is i+M*j, and a value range of j is [0, (N/M)-1].

For example, the corresponding method is to evenly allocate the candidate resources among the candidate beams. A derivation process of the corresponding calculation equation is as follows. A total number of candidate resources in a resource allocation cycle is N, and the candidate resources are numbered from 1 to N. A total number of the candidate beams is M, and the candidate beams are numbered from 1 to M. The number of resources allocated to each candidate beam is N/M. A resource index allocated for the i-th candidate beam is [1+(i-1)^{∗}(N/M), 1+(i-1)^{∗}(N/M)+ ((N/M)-1)].

For example, the corresponding method is to evenly allocate the candidate resources among the candidate beams. A derivation process of another corresponding calculation equation is as follows. A total number of candidate resources in a resource allocation cycle is N, and the candidate resources are numbered from 0 to N-1. A total number of the candidate beams is M, and the candidate beams are numbered from 0 to M-1. The number of resources allocated to each candidate beam is N/M. The resource index allocated for the i-th candidate beam is [i^{∗}(N/M), i^{∗}(N/M)+((N/M)-1)].

In detail, configuring the correspondence relationship between the candidate resources and the candidate beams can include the following four possible implementation ways.

Method 1: if the user terminal receives the configuration of the candidate resources only, the correspondence relationship between the candidate resources and the candidate beams can be configured based on the received configuration of the candidate resources, a preset configuration of the candidate beams, and a preset corresponding method. Alternatively, the correspondence relationship between the candidate resources and the candidate beams can be configured based on the received configuration of the candidate resources, a preset configuration of the candidate beams, and a preset calculation equation.

Method 2: if the user terminal receives the configuration of the candidate resources and the configuration of the candidate beams only, the correspondence relationship between the candidate resources and the candidate beams can be configured based on the received configuration of the candidate resources, the received configuration of the candidate beams, and a preset corresponding method. Alternatively, the correspondence relationship between the candidate resources and the candidate beams can be configured based on the received configuration of the candidate resources, the received configuration of the candidate beams, and a preset calculation equation.

Method 3: if the user terminal receives the configuration of the candidate resources and an identification of a corresponding method between the candidate beams and the candidate beams only, a preset corresponding method or a calculation equation corresponding to the corresponding method can be obtained according to the identification of the corresponding method, then the correspondence relationship between the candidate resources and the candidate beams can be configured based on the received configuration of the candidate resources, a preset configuration of the candidate beams, and the preset corresponding method; or, the correspondence relationship between the candidate resources and the candidate beams can be configured based on the received configuration of the candidate resources, a preset configuration of the candidate beams, and the calculation equation corresponding to the corresponding method.

Method 4: if the user terminal receives the configuration of the candidate resources, the configuration of the candidate beams, and an identification of a corresponding method between the candidate beams and the candidate beams only, a preset corresponding method or a calculation equation corresponding to the corresponding method can be obtained according to the identification of the corresponding method, then the correspondence relationship between the candidate resources and the candidate beams can be configured based on the received configuration of the candidate resources, the received configuration of the candidate beams, and the preset corresponding method; or, the correspondence relationship between the candidate resources and the candidate beams can be configured based on the received configuration of the candidate resources, the received configuration of the candidate beams, and the calculation equation corresponding to the corresponding method.

Method 5: if the user terminal receives the configuration of the candidate resources, and a correspondence table between the candidate beams and the candidate beams only, the correspondence relationship between the candidate resources and the candidate beams can be configured based on the received configuration of the candidate resources, a preset configuration of the candidate beams, and the received correspondence table between the candidate beams and the candidate beams.

For example, the correspondence relationship between the candidate resources and the candidate beams can be queried in the received correspondence table between the candidate resources and the candidate beams, and the correspondence relationship between the candidate resources and the candidate beams can be configured based on the queried correspondence relationship between the candidate resources and the candidate beams.

In an embodiment of the disclosure, the user terminal can select a target beam from the candidate beams.

In some embodiments of the disclosure, the configuration of the correspondence relationship between the candidate resources and the candidate beams includes: a configuration of a correspondence relationship between indexes of the candidate resources and indexes of the candidate beams.

It can be understood that the correspondence relationship between the indexes of the candidate resources and the indexes of the candidate beams can include the following two possible implementation ways.

Method 1: the number of groups is determined based on the number of the candidate beams, consecutively numbered candidate resources are classified into the same group, and indexes of candidate resources in the same group correspond to an index of the same candidate beam.

For example, the number of the candidate resources is 8, the number of the groups can be determined to be 2. Candidate resources numbered 1 to 4 are divided into group 1, candidate resources numbered 5 to 8 are divided into group 2, the candidate resources numbered 1 to 4 in group 1 correspond to candidate beam 1, and the candidate resources numbered 5 to 8 in group 2 correspond to candidate beam 2.

Method 2: the number of groups is determined based on the number of the candidate beams, interleaved grouping is performed on sequentially numbered candidate resources according to indexes of the groups, and indexes of candidate resources in the same group correspond to an index of the same candidate beam.

For example, the number of the candidate resources is 9, the number of the groups can be determined to be 2. Candidate resources numbered 1, 3, 5, 7, and 9 are divided into group 1, and candidate resources numbered 2, 4, 6, and 8 are divided into group 2. The candidate resources numbered 1, 3, 5, 7, and 9 in group 1 correspond to candidate beam 1, and the candidate resources numbered 2, 4, 6, and 8 in group 2 correspond to candidate beam 2.

In some embodiments of the disclosure, in order to distinguish multiple candidate resources within the same resource allocation cycle, different candidate resources in the resource allocation cycle differ in terms of at least one of a time domain resource, a frequency domain resource and a demodulation signal. The time domain resources can include time slots (SLOTs), the frequency domain resources can include physical resource blocks (PRBs), and the demodulation signals can include demodulation reference signals (DMRS).

In this case, configuring the indexes of the candidate resources can include performing at least one of time domain numbering, frequency domain numbering, and demodulation signal numbering on the candidate resources.

A numbering order of the at least one of the time domain numbering, the frequency domain numbering, and the demodulation signal numbering is determined by a network configuration, or by a numbering rule specified by a network configuration or a protocol.

For example, the time domain numbering can be numbering in a chronological order or in a reverse chronological order. For example, if the time domain numbering is numbering in the chronological order, an index of a candidate resource with a time slot being 1 is smaller than that of a candidate resource with a time slot being 2. Conversely, if the time domain numbering is numbering in the reverse chronological order, the index of the candidate resource with the time slot being 1 is greater than that of the candidate resource with the time slot being 2.

For example, the frequency domain numbering can be numbering in an ascending order of frequency values or in a descending order of the frequency values. For example, the frequency domain numbering is numbering in the ascending order of the frequency values, then an index of a candidate resource with a physical resource block PRB being 1 is smaller than an index of a candidate resource with a physical resource block PRB being 2. Conversely, the frequency domain numbering is numbering in the descending order of the frequency values, then the index of the candidate resource with the physical resource block PRB being 1 is greater than the index of the candidate resources with the physical resource block PRB being 2.

Configuring the indexes of the candidate resources, such as performing a combining numbering of the time domain numbering and the frequency domain numbering on the candidate resources, may include following two possible implementation ways.

Method 1: the time domain numbering precedes the frequency domain numbering.

Optionally, a next resource of the last frequency domain resource in a current time domain is an unnumbered resource that is closest to the last frequency domain resource in terms of both time position and frequency. For example, as shown in FIG. 3, frequency domain resources with time slot being 1 are resources 1 to 3, thus the last frequency domain resource with time slot being 1 is resource 3, and the next resource is the resource that is closest to resource 3 in terms of both time position and frequency and has not been numbered yet, it is determined as resource 4, thus the frequency domain resources of time slot 2 are resources 4 to 6.

Alternatively, indexes of the frequency domain resources within the same time domain are numbered in an ascending order of frequency values or in a descending order of the frequency values. For example, as shown in FIG. 4, the indexes of the frequency domain resources with time slot being 1 are numbered in an ascending order of frequency values, numbered from 1 to 3. The indexes of the frequency domain resources with time slot being 2 are numbered in an ascending order of frequency values, numbered from 4 to 6.

Method 2: the frequency domain numbering precedes the time domain numbering.

Optionally, a next resource of the last time domain resource in a current frequency domain is an unnumbered resource that is closest to the last time domain resource in terms of both frequency position and time. For example, as shown in FIG. 5, time domain resources with frequency being f1 are 1 to 3, thus the last time domain resource with frequency being f1 is resource 3, and the next resource is the resource that is closest to resource 3 in terms of both frequency position and time and has not been numbered yet, it is determined as resource 4. Therefore, the time domain resources with frequency being f2 are resources 4 to 6.

Alternatively, indexes of the time domain resources within the same frequency domain can be numbered in a chronological order or in a reverse chronological order. For example, as shown in FIG. 6, the indexes of the time domain resources with frequency being f1 are numbered in the chronological order, numbered from 1 to 3. The indexes of the time domain resources with frequency being f2 are numbered in the chronological order, numbered from 4 to 6.

S302, a candidate resource corresponding to the target beam is determined as a target resource according to the correspondence relationship.

In an embodiment of the disclosure, the user terminal may determine candidate resource corresponding to the target beam as the target resource according to the correspondence relationship between the candidate resources and the candidate beams.

S303, a signal is sent on the target resource.

In some embodiments of the disclosure, the user terminal may send the signal to the base station on the target resource.

Optionally, sending the signal on the target resource can include obtaining a location of the target resource, and sending the signal on the target resource based on the location of the target resource.

In some embodiments of the disclosure, the configuration of the candidate resources includes resource configuration information of the candidate resources, and locations of the candidate resources can be determined based on the resource configuration information of the candidate resources.

The resource configuration information of the candidate resources can include at least one of a resource allocation cycle, a frequency domain resource location, a time domain starting resource location, a number of resources in the resource allocation cycle, a time domain interval between adjacent resources, and a frequency interval between adjacent resources. Correspondingly, determining the locations of the candidate resources based on the resource configuration information of the candidate resources can include determining a location of a first candidate resource in the resource allocation cycle based on the resource allocation cycle and the time domain starting resource location. After determining the location of the first candidate resource in the resource allocation cycle, locations of a second to a last candidate resources in the resource allocation cycle are determined based on at least one of the number of resources in the resource allocation cycle, the time domain interval between adjacent resources, and the frequency interval between adjacent resources.

Optionally, determining the location of the first candidate resource in the resource allocation cycle based on the resource allocation cycle and the time domain starting resource location may include determining the location of the first candidate resource based on a calculation equation between the location of the first candidate resource and the resource allocation cycle, as well as the time domain starting resource location.

It can be understood that after determining the location of the first candidate resource in the resource allocation cycle, the locations of the second to the last candidate resources in the resource allocation cycle can be determined based on at least one of the number of resources in the resource allocation cycle, the time domain interval between adjacent resources, and the frequency interval between adjacent resources. For example, the location of the second candidate resource can be determined based on the location of the first candidate resource and the time domain interval between adjacent resources.

In this embodiment, based on the configuration of the candidate resources, the configuration of the candidate beams, and the correspondence relationship between the candidate resources and the candidate beams, the target beam is selected from the candidate beams, and the candidate resource corresponding to the target beam is determined as the target resource according to the correspondence relationship. The signal is sent on the target resource. In this way, the user terminal can select the target beam from the candidate beams, and then determine the candidate resource corresponding to the target beam as the target resource based on the correspondence relationship between the candidate resources and the candidate beams, and send the signal on the target resource.

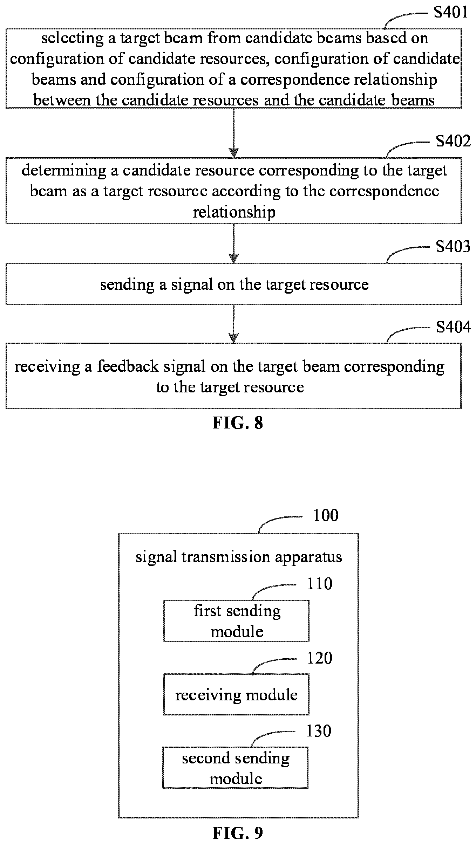

FIG. 8 is a flowchart of a signal transmission method according to another embodiment of the disclosure. The method is performed by a user terminal. As illustrated in FIG. 8, the signal transmission method includes the following steps.

S401, a target beam is selected from candidate beams based on a configuration of candidate resources, a configuration of candidate beams and a configuration of a correspondence relationship between the candidate resources and the candidate beams.

In some embodiments of the disclosure, selecting the target beam from the candidate beams may include following two possible implementation ways.

Method 1: a candidate beam having a measurement value equal to or greater than a preset measurement threshold in the candidate beams is determined as the target beam.

The preset measurement threshold can be determined by a network configuration or protocol agreement.

For example, if a reference signal receiving power (RSRP) in a candidate beam with a synchronous signal block SSB being 1 is equal to or greater than the preset measurement threshold, the user terminal can choose the candidate beam with the synchronous signal block SSB being 1 as the target beam.

Method 2: a candidate beam corresponding to a candidate resource that corresponds to a nearest sending time of the user terminal in the candidate resources is determined as the target beam.

For example, if the sending time of resource 1 is the nearest, the candidate beam corresponding to resource 1 can be determined as the target beam.

In some embodiments of the disclosure, the configuration of the candidate resources may include states of the user terminal corresponding to the candidate resources. The states of the user terminal may include an idle (IDLE) state and an inactive state (INACTIVE). Selecting the target beam from the candidate beams can include two possible implementation ways.

Method 1, a candidate beam is determined from the candidate beams as the target beam. A measurement value of the candidate beam is equal to or greater than the preset measurement threshold, and a user terminal state corresponding to a candidate resource that corresponds to the candidate beam is consistent with a current state of the user terminal.

For example, if the reference signal receiving power (RSRP) in the candidate beam with synchronous signal block SSB being 1 is equal to or greater than the preset measurement threshold, and the user terminal state corresponding to the candidate beam with synchronous signal block SSB being 1 is consistent with the current state of the user terminal, the user terminal can choose the candidate beam with synchronous signal block SSB being 1 as the target beam.

Method 2, a candidate beam is determined from the candidate beams as the target beam. A candidate resource corresponding to the candidate beam corresponds to a nearest sending time of the user terminal, and a user terminal state corresponding to the candidate resource that corresponds to the candidate beam is consistent with a current state of the user terminal.

For example, if the sending time of resource 1 is the nearest, and the user terminal state corresponding to the candidate beam of resource 1 is consistent with the current state of the user terminal, the candidate beam corresponding to resource 1 can be determined as the target beam.

S402, a candidate resource corresponding to the target beam is determined as a target resource according to the correspondence relationship.

In the embodiments of the disclosure, step S402 can be implemented in any of the various embodiments of the disclosure, and the embodiments of the disclosure do not limit or elaborate on this.

S403, a signal is sent on the target resource.

It can be understood that the configuration of the candidate resources can also include at least one of indexes of hybrid automatic repeat request (HABQ) processes of the candidate resources and the number of the hybrid automatic repeat request processes. When a type of the candidate resources is a data channel, the indexes of the hybrid automatic repeat request processes of the candidate resources in the resource allocation cycle are the same; or, indexes of hybrid automatic repeat request processes of all configured candidate resources are the same.

When the indexes of hybrid automatic repeat request processes of the candidate resources in the resource allocation cycle are the same, the indexes of hybrid automatic repeat request processes of the candidate resources in the resource allocation cycle are determined based on an index of a hybrid automatic repeat request process of any of : a candidate resource earliest in a time domain, a candidate resource latest in the time domain, a candidate resource with a maximum frequency, a candidate resource with a minimum frequency, a candidate resource with a maximum index and a candidate resource with a minimum index in the resource allocation cycle.

Optionally, sending the signal on the target resource can include determining a target hybrid automatic repeat request process based on an index of a hybrid automatic repeat request process of the target resource, and sending the signal on the target resource using the target hybrid automatic repeat request process. For example, if the index of the hybrid automatic repeat request process of the target resource is 5, it can be determined that the target hybrid automatic repeat request process is 5, and the target hybrid automatic repeat request process is used to send the signal on the target resource.

Optionally, after sending the signal on the target resource, a feedback signal can also be monitored through a channel, and a spatial relationship of the channel is determined based on the target beam corresponding to the target resource. The channel includes but is not limited to a Physical Downlink Control Channel (PDCCH) and a Physical Downlink Shared Channel (PDSCH).

For example, if the target beam is a candidate beam with a synchronous signal block SSB being 1, the spatial relationship of the channel can be determined based on the candidate beam with the synchronous signal block SSB being 1.

S404, a feedback signal is received on the target beam corresponding to the target resource.

In some embodiments of the disclosure, the user terminal may receive the feedback signal sent by the base station on the target beam corresponding to the target resource.

In this embodiment, based on the configuration of the candidate resources, the configuration of the candidate beams, and the configuration of the correspondence relationship between the candidate resources and the candidate beams, the target beam is selected from the candidate beams, and the candidate resource corresponding to the target beam is determined as the target resource according to the correspondence relationship. The signal is sent on the target resource, and the feedback signal is received on the target beam corresponding to the target resource. In this way, the user terminal can select the target beam from the candidate beams, and then determine the candidate resource corresponding to the target beam as the target resource based on the correspondence relationship between the candidate resources and the candidate beams. The user terminal can send the signal on the target resource and also receive the feedback signal on the target beam, improving the reliability of the user terminal receiving feedback signals.

Corresponding to the signal transmission method provided in the above embodiments, this disclosure also provides a signal transmission apparatus applied by a base station. As the signal transmission apparatus provided in the disclosure corresponds to the signal transmission method provided in the above embodiments of FIG. 1 to 2, the implementations of the signal transmission method is also applicable to the signal transmission apparatus provided in this disclosure, and will not be described in detail in this embodiment. FIG. 9 is a block diagram of a signal transmission apparatus according to an embodiment of the disclosure.

FIG. 9 is a block diagram of a signal transmission apparatus according to an embodiment of the disclosure.

As illustrated in FIG. 9, the signal transmission apparatus 100 includes a first sending module 110, a receiving module 120, and a second sending module 130.

The first sending module 110 is configured to send configuration information, the configuration information comprises candidate resources.

The receiving module 120 is configured to receive a signal on a target resource among the candidate resources.

The second sending module 130 is configured to send a feedback signal on a target beam corresponding to the target resource.

The signal transmission apparatus according to the embodiments of the disclosure sends the configuration information which includes the candidate resources, receives the signal on the target resource in the candidate resources, and sends a feedback signal on the target beam corresponding to the target resource. As a result, the base station can send the configuration information including the candidate resources, receive the signal on the target resource in the candidate resources, and send the feedback signal on the target beam corresponding to the target resources, improving the reliability of the base station's feedback signal transmission.

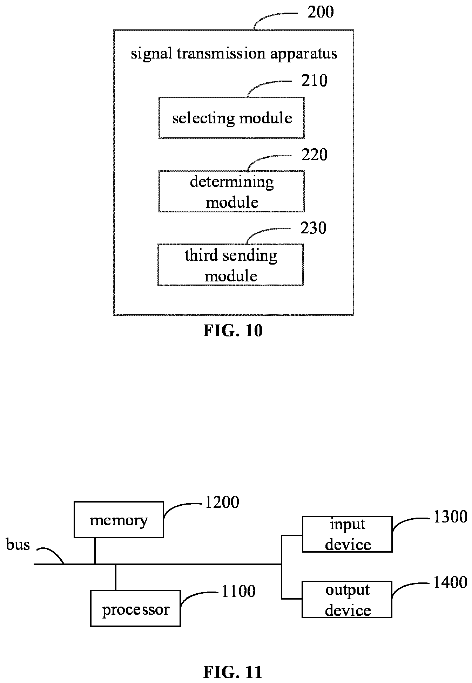

Corresponding to the signal transmission method provided in the above embodiments, this disclosure also provides a signal transmission apparatus applied by a user terminal. As the signal transmission apparatus provided in the disclosure corresponds to the signal transmission method provided in the above embodiments of FIG. 7 to 8, the implementations of the signal transmission method is also applicable to the signal transmission apparatus provided in this disclosure, and will not be described in detail in this embodiment. FIG. 10 is a block diagram of a signal transmission apparatus according to another embodiment of the disclosure.

FIG. 10 is a block diagram of a signal transmission apparatus according to another embodiment of the disclosure.

As illustrated in FIG. 10, the signal transmission apparatus 200 includes a selecting module 210, a determining module 220, and a third sending module 230.

The selecting module 210 is configured to select a target beam from candidate beams based on a configuration of candidate resources, a configuration of candidate beams and a configuration of a correspondence relationship between the candidate resources and the candidate beams;

The determining module 220 is configured to determine a candidate resource corresponding to the target beam as a target resource according to the correspondence relationship; and

The third sending module 230 is configured to send a signal on the target resource.

The signal transmission apparatus according to the embodiments of the disclosure selects the target beam from the candidate beams based on the configuration of the candidate resources, the configuration of the candidate beams and the configuration of the correspondence relationship between the candidate resources and the candidate beams, determines the candidate resource corresponding to the target beam as the target resource according to the correspondence relationship, and sends the signal on the target resource. As a result, the user terminal can select the target beam from the candidate beams, determine the candidate resource corresponding to the target beam as the target resource according to the correspondence relationship, and send the signal on the target resource.

In accordance with the embodiments of the disclosure, the disclosure further provides a base station comprising the signal transmission apparatus 100 provided in the embodiments of the disclosure.

The base station according to the embodiments of the disclosure sends the configuration information which includes the candidate resources, receives the signal on the target resource in the candidate resources, and sends the feedback signal on the target beam corresponding to the target resource. As a result, the base station can send the configuration information including the candidate resources, receive the signal on the target resource in the candidate resources, and send the feedback signal on the target beam corresponding to the target resources, improving the reliability of the base station's feedback signal transmission.

In accordance with the embodiments of the disclosure, the disclosure further provides a user terminal comprising the signal transmission apparatus 200 provided in the embodiments of the disclosure.

The user terminal according to the embodiments of the disclosure selects the target beam from the candidate beams based on the configuration of the candidate resources, the configuration of the candidate beams and the configuration of the correspondence relationship between the candidate resources and the candidate beams, determines the candidate resource corresponding to the target beam as the target resource according to the correspondence relationship, and sends the signal on the target resource. As a result, the user terminal can select the target beam from the candidate beams, determine the candidate resource corresponding to the target beam as the target resource according to the correspondence relationship, and send the signal on the target resource.

In accordance with the embodiments of the disclosure, the disclosure further provides an electronic device and a readable storage medium.

As shown in FIG. 11, it is a block diagram of an electronic device according to an embodiment of the disclosure. The electronic device is intended to represent various forms of digital computers, such as a laptop computer, a desktop computer, a workstation, a personal digital assistant, servers, a blade server, a mainframe computer, and other suitable computers. The electronic device may also represent various forms of mobile devices, such as a personal digital processor, a cellular phone, a smart phone, a wearable device, and other similar computing devices. The components, their connections and relationships, and their functions shown herein are by way of example only, and are not intended to limit implementations of the disclosure described and/or claimed herein.

As shown in FIG. 11, the electronic device includes: one or more processors 1100, a memory 1120, and interfaces for connecting various components, including a high-speed interface and a low-speed interface. The various components are interconnected using different buses and may be mounted on a common motherboard or otherwise as desired. The processor may process instructions executed within the communication device, including instructions stored in memory or instructions stored in the memory to display graphical information of the GUI on an external input/output device (such as a display device coupled to the interface). In other embodiments, multiple processors and/or multiple buses may be used with multiple memories, if desired. Likewise, multiple electronic devices may be connected, with each device providing some of the necessary operations (e.g., as a server array, a group of blade servers, or a multi-processor system). In FIG. 11, one processor 1100 is used as an example.

The memory 1200 is the non-transitory computer-readable storage medium provided by the present disclosure. The memory stores instructions executable by at least one processor, so that the at least one processor executes the signal transmission method provided by the present disclosure. The non-transitory computer-readable storage medium of the present disclosure stores computer instructions for causing a computer to perform the signal transmission method provided by the present disclosure.

As a non-transitory computer-readable storage medium, the memory 1200 can be used to store non-transitory software programs, non-transitory computer-executable programs, and modules, such as program instructions/modules (for example, the first sending module 110, the receiving module, and the second sending module shown in FIG. 9) corresponding to the signal transmission method in the embodiments of the present disclosure. The processor 1100 executes various functional applications and data processing of the server by running the non-transitory software programs, instructions and modules stored in the memory 1200, i.e., implementing the signal transmission method in the above method embodiments.

The memory 1200 may include a program storage area and a data storage area, the program storage area may store an operating system, an application program required for at least one function; the data storage area may store data created according to the use of the positioning electronic device, and the like. Additionally, the memory 1200 may include a high-speed random access memory, and may also include a non-transitory memory, such as at least one magnetic disk storage device, a flash memory device, or other non-transitory solid-state storage devices. Optionally, the memory 1200 may optionally include a memory located remotely from processor 1100, and these remote memories may be connected to the positioning electronic device via a network. Examples of such networks include, but are not limited to, the internet, an intranet, a local area network, a mobile communication network, and combinations thereof.

The electronic device may further include: an input device 1300 and an output device 1400. The processor 1100, the memory 1200, the input device 1300, and the output device 1400 may be connected through a bus or in other ways, and the connection through a bus is taken as an example in FIG. 11.

The input device 1300 may receive input numerical or character information and generate a key signal input related to user settings and functional control of the positioning electronic device, such as a touch screen, a keypad, a mouse, a trackpad, a touchpad, a pointing stick, one or more mouse buttons, trackballs, joysticks, or other input devices. The output device 2040 may include a display device, an auxiliary lighting device (e.g., LED), and a haptic feedback device (e.g., vibration motor), and the like. The display device may include, but is not limited to, a liquid crystal display (LCD), a light emitting diode (LED) display, and a plasma display. In some implementations, the display device may be a touch screen.

Various implementations of the system and technique described herein can be implemented in a digital electronic circuitry, an integrated circuit system, an application specific ASIC (application specific integrated circuit), computer hardware, firmware, software, and/or a combination thereof. These various embodiments may include being implemented in one or more computer programs executable and/or interpretable on a programmable system including at least one programmable processor, which may be a special purpose or general-purpose programmable processor, may receive data and instructions from a storage system, at least one input device, and at least one output device, and transmit data and instructions to the storage system, the at least one input device, and the at least one output device.

These computational programs (also referred to as programs, software, software applications, or codes) include machine instructions for programmable processors, and may be implemented using high-level procedural and/or object-oriented programming languages, and/or assembly/machine languages. As used herein, the terms "machine-readable medium" and "computer-readable medium" refer to any computer program product, device, and/or apparatus (for example, a magnetic disk, an optical disk, a memory, a programmable logic device (PLD)) for providing machine instructions and/or data to a programmable processor, including machine-readable media that receive machine instructions as machine-readable signals. The term "machine-readable signal" refers to any signal used to provide machine instructions and/or data to a programmable processor.

To provide interaction with a user, the system and technique described herein may be implemented on a computer having a display device (e.g., CRT (cathode ray tube) or LCD (liquid crystal display) monitor) for displaying information to the user; and a keyboard and pointing device (e.g., mouse or trackball) through which the user can provide input to the computer. Other kinds of devices can also be used to provide interaction with the user; for example, the feedback provided to the user can be any form of sensory feedback (e.g., visual feedback, auditory feedback, or tactile feedback); and can be in any form (including acoustic input, voice input, or tactile input) to receive input from the user.

The system and technique described herein may be implemented on a computing system that includes back-end components (e.g., as a data server), or a computing system that includes middleware components (e.g., an application server), or a computing system that includes front-end components (e.g., a user computer having a graphical user interface or web browser through which a user may interact with implementations of the system and technique described herein), or a computing system that includes any combination of such backend components, middleware components, or front-end components. The components of the system may be interconnected by any form or medium of digital data communication (e.g., a communication network). Examples of communication networks include: Local Area Networks (LANs), Wide Area Networks (WANs), and the Internet.

A computer system can include a client and a server. The client and the server are generally remote from each other and usually interact through a communication network. The relationship between the client and the server arises by virtue of computer programs running on the respective computers and having a client-server relationship with each other.

With the signal transmission method according to the embodiments of the disclosure, the configuration information is sent, which includes the candidate resources, the signal on the target resource in the candidate resources is received, and the feedback signal is sent on the target beam corresponding to the target resource. In this way, the base station can send the configuration information including the candidate resources, receive the signal on the target resource in the candidate resources, and send the feedback signal on the target beam corresponding to the target resource, improving the reliability of the base station's feedback signal transmission.

It should be understood that steps may be reordered, added or deleted using various forms of flows shown above. For example, the steps described in the present disclosure can be executed in parallel, sequentially, or in different orders, as long as the desired results of the technical solutions disclosed in the present disclosure can be achieved, which is not limited herein.

## Claims

1. A signal transmission method, performed by a base station, comprising:
sending configuration information, wherein the configuration information comprises candidate resources;
receiving a signal on a target resource among the candidate resources; and
sending a feedback signal on a target beam corresponding to the target resource.

2. The signal transmission method of claim 1, wherein the configuration information further comprises at least one of:
candidate beams;
a correspondence table between the candidate resources and the candidate beams, wherein the target resource is a candidate resource corresponding to the target beam in the candidate beams; or
an identification of a corresponding method between the candidate resources and the candidate beams.

3. The signal transmission method according to claim 2, wherein configuring the correspondence table between the candidate resources and the candidate beams comprises at least one of:
configuring the correspondence table between the candidate resources and the candidate beams using a preset corresponding method according to the candidate resources, the candidate beams and the corresponding method; or
configuring the correspondence table between the candidate resources and the candidate beams using a calculation equation corresponding to a preset corresponding method according to the candidate resources, the candidate beams and the corresponding method.

4. The signal transmission method according to claim 1, wherein the configuration information further comprises at least one of:
a type of the candidate resources;
user terminal states corresponding to the candidate resources; or
resource configuration information of the candidate resources.

5. The signal transmission method according to claim 4, wherein the type of the candidate resources comprises at least one of:
a data channel;
a control channel; or
a detection signal.

6. The signal transmission method according to claim 4 or 5, wherein the resource configuration information comprises at least one of:
a resource allocation cycle, a frequency domain resource location, a time domain starting resource location, a number of resources in the resource allocation cycle, a time domain interval between adjacent resources, and a frequency interval between adjacent resources.

7. The signal transmission method according to claim 1, wherein the configuration information further comprises:
identifications of the candidate beams.

8. The signal transmission method according to claim 7, wherein the identification of the candidate beam comprises at least one of a synchronization signal block identification and a channel state information reference signal identification.

9. The signal transmission method according to claim 2 or 3, wherein the correspondence table between the candidate resources and the candidate beams comprises:
a correspondence table between indexes of the candidate resources and indexes of the candidate beams.

10. The signal transmission method according to claim 9, wherein configuring the correspondence table between the indexes of the candidate resources and the indexes of the candidate beams comprises:
determining a number of groups according to a number of the candidate beams;
classifying candidate resources consecutively numbered into a same group; and
obtaining the correspondence table by corresponding indexes of candidate resources in the same group to an index of a same candidate beam.

11. The signal transmission method according to claim 9, wherein configuring the correspondence table between the indexes of the candidate resources and the indexes of the candidate beams comprises:
determining a number of groups according to a number of the candidate beams;
performing, according to indexes of the groups, interleaved grouping on candidate resources sequentially numbered; and
obtaining the correspondence table by corresponding indexes of candidate resources in a same group to an index of a same candidate beam.

12. The signal transmission method according to claim 6, wherein different candidate resources in the resource allocation cycle differ in terms of at least one of a time domain resource, a frequency domain resource and a demodulation signal.

13. The signal transmission method according to claim 12, wherein configuring the indexes of the candidate resources comprises:
performing at least one of time domain numbering, frequency domain numbering and demodulation signal numbering on the candidate resources.

14. The signal transmission method according to claim 13, wherein a numbering order of the at least one of the time domain numbering, the frequency domain numbering and the demodulation signal numbering is determined by a network configuration, or by a numbering rule specified by a network configuration or a protocol.

15. The signal transmission method according to claim 13, wherein the time domain numbering is numbering in a chronological order or in a reverse chronological order.

16. The signal transmission method according to claim 13, wherein the frequency domain numbering is numbering in an ascending order of frequency values or in a descending order of the frequency values.

17. The signal transmission method according to claim 13, wherein the time domain numbering precedes the frequency domain numbering;
a next resource of a last frequency domain resource in a current time domain is an unnumbered resource that is closest to the last frequency domain resource in terms of both time location and frequency;
or,
indexes of frequency domain resources within a same time domain are numbered in an ascending order of frequency values or in a descending order of the frequency values.

18. The signal transmission method according to claim 13, wherein the frequency domain numbering precedes the time domain numbering;
a next resource of a last time domain resource in a current frequency domain is an unnumbered resource that is closest to the last time domain resource in terms of both frequency location and time;
or,
indexes of time domain resources within a same frequency domain are numbered in a chronological order or in a reverse chronological order.

19. The signal transmission method according to claim 6, wherein the type of the candidate resources is the data channel, and indexes of hybrid automatic repeat request processes of the candidate resources in the resource allocation cycle are the same;
or,
indexes of hybrid automatic repeat request processes of all configured candidate resources are the same.

20. The signal transmission method according to claim 19, wherein the indexes of the hybrid automatic repeat request processes of the candidate resources in the resource allocation cycle are the same;
the indexes of the hybrid automatic repeat request processes of the candidate resources in the resource allocation cycle are determined according to an index of a hybrid automatic repeat request process of any of: a candidate resource earliest in a time domain, a candidate resource latest in the time domain, a candidate resource with a maximum frequency, a candidate resource with a minimum frequency, a candidate resource with a maximum index and a candidate resource with a minimum index in the resource allocation cycle.

21. A signal transmission method, performed by a user terminal, comprising:
selecting a target beam from candidate beams based on a configuration of candidate resources, a configuration of candidate beams and a configuration of a correspondence relationship between the candidate resources and the candidate beams;
determining a candidate resource corresponding to the target beam as a target resource according to the correspondence relationship; and
sending a signal on the target resource.

22. The signal transmission method according to claim 21, wherein configuring the correspondence relationship between the candidate resources and the candidate beams comprises:
receiving the configuration of the candidate resources; and
configuring the correspondence relationship between the candidate resources and the candidate beams according to the received configuration of the candidate resources, a preset configuration of the candidate beams and a preset corresponding method; or configuring the correspondence relationship between the candidate resources and the candidate beams according to the received configuration of the candidate resources, a preset configuration of the candidate beams and a preset calculation equation.

23. The signal transmission method according to claim 21, wherein configuring the correspondence relationship between the candidate resources and the candidate beams comprises:
receiving the configuration of the candidate resources and the configuration of the candidate beams; and
configuring the correspondence relationship between the candidate resources and the candidate beams according to the received configuration of the candidate resources, the received configuration of the candidate beams and a preset corresponding method; or configuring the correspondence relationship between the candidate resources and the candidate beams according to the received configuration of the candidate resources, the received configuration of the candidate beams and a preset calculation equation.

24. The signal transmission method according to claim 21, wherein configuring the correspondence relationship between the candidate resources and the candidate beams comprises:
receiving the configuration of the candidate resources and an identification of a corresponding method between the candidate beams and the candidate beams;
obtaining a preset corresponding method or a calculation equation corresponding to the corresponding method according to the identification of the corresponding method; and
configuring the correspondence relationship between the candidate resources and the candidate beams according to the received configuration of the candidate resources, a preset configuration of the candidate beams and the preset corresponding method; or configuring the correspondence relationship between the candidate resources and the candidate beams according to the received configuration of the candidate resources, a preset configuration of the candidate beams and the calculation equation corresponding to the corresponding method.

25. The signal transmission method according to claim 21, wherein configuring the correspondence relationship between the candidate resources and the candidate beams comprises:
receiving the configuration of the candidate resources, the configuration of the candidate beams, and an identification of a corresponding method between the candidate beams and the candidate beams;
obtaining a preset corresponding method or a calculation equation corresponding to the corresponding method according to the identification of the corresponding method; and
configuring the correspondence relationship between the candidate resources and the candidate beams according to the received configuration of the candidate resources, the received configuration of the candidate beams and the preset corresponding method; or configuring the correspondence relationship between the candidate resources and the candidate beams according to the received configuration of the candidate resources, the received configuration of the candidate beams, and the calculation equation corresponding to the corresponding method.

26. The signal transmission method according to claim 21, wherein configuring the correspondence relationship between the candidate resources and the candidate beams comprises:
receiving the configuration of the candidate resources, and a correspondence table between the candidate beams and the candidate beams; and
configuring the correspondence relationship between the candidate resources and the candidate beams according to the received configuration of the candidate resources, a preset configuration of the candidate beams, and the received correspondence table between the candidate beams and the candidate beams.

27. The signal transmission method according to claim 21, wherein after sending the signal on the target resource, the signal transmission method further comprises:
receiving a feedback signal on the target beam corresponding to the target resource.

28. The signal transmission method according to claim 21, wherein selecting the target beam from the candidate beams comprises:
determining a candidate beam having a measurement value equal to or greater than a preset measurement threshold in the candidate beams as the target beam;
or
determining a candidate beam corresponding to a candidate resource that corresponds to a nearest sending time of the user terminal in the candidate resources as the target beam.

29. The signal transmission method according to claim 21, wherein the configuration of the candidate resources comprises user terminal states corresponding to the candidate resources;
wherein selecting the target beam from the candidate beams comprises:
determining a candidate beam in the candidate beams as the target beam, wherein the candidate beam has a measurement value equal to or greater than a preset measurement threshold value, and a user terminal state corresponding to a candidate resource that corresponds to the candidate beam is consistent with a current state of the user terminal;
or
determining a candidate beam in the candidate beams as the target beam, wherein a candidate resource corresponding to the candidate beam corresponds to a nearest sending time of the user terminal, and a user terminal state corresponding to the candidate resource that corresponds to the candidate beam is consistent with a current state of the user terminal.

30. The signal transmission method according to claim 21, wherein sending the signal on the target resource comprises:
obtaining a location of the target resource;
sending the signal on the target resource according to the location of the target resource.

31. The signal transmission method according to claim 30, wherein the configuration of the candidate resources comprises resource configuration information of the candidate resources;
the signal transmission method further comprises:
determining locations of the candidate resources according to the resource configuration information of the candidate resources.

32. The signal transmission method according to claim 31, wherein the resource configuration information of the candidate resources comprises at least one of a resource allocation cycle, a frequency domain resource location, a time domain starting resource location, a number of resources in the resource allocation cycle, a time domain interval between adjacent resources, and a frequency interval between adjacent resources;
wherein determining the locations of the candidate resources according to the resource configuration information of the candidate resources comprises:
determining a location of a first candidate resource in the resource allocation cycle according to the resource allocation cycle and the time domain starting resource location.

33. The signal transmission method according to claim 32, wherein determining the locations of the candidate resources according to the resource configuration information of the candidate resources comprises:
after determining the location of the first candidate resource in the resource allocation cycle, determining locations of a second to a last candidate resources in the resource allocation cycle according to at least one of the number of resources in the resource allocation cycle, the time domain interval between adjacent resources, and the frequency interval between adjacent resources.

34. The signal transmission method according to any of claims 21-33, wherein the configuration of the correspondence relationship between the candidate resources and the candidate beams comprises:
a configuration of a correspondence relationship between indexes of the candidate resources and indexes of the candidate beams.

35. The signal transmission method according to claim 34, configuring the correspondence relationship between the indexes of the candidate resources and the indexes of the candidate beams comprises:
determining a number of groups according to a number of the candidate beams;
classifying candidate resources consecutively numbered into a same group; and
corresponding indexes of candidate resources in the same group to an index of a same candidate beam.

36. The signal transmission method according to claim 34, configuring the correspondence relationship between the indexes of the candidate resources and the indexes of the candidate beams comprises:
determining a number of groups according to a number of the candidate beams;
performing, according to indexes of the groups, interleaved grouping on candidate resources sequentially numbered; and
corresponding indexes of candidate resources in a same group to an index of a same candidate beam.

37. The signal transmission method according to claim 32, wherein different candidate resources in the resource allocation cycle differ in terms of at least one of a time domain resource, a frequency domain resource and a demodulation signal.

38. The signal transmission method according to claim 37, wherein configuring the indexes of the candidate resources comprises:
performing at least one of time domain numbering, frequency domain numbering and demodulation signal numbering on the candidate resources.

39. The signal transmission method according to claim 38, wherein a numbering order of the at least one of the time domain numbering, the frequency domain numbering and the demodulation signal numbering is determined by a network configuration, or by a numbering rule specified by a network configuration or a protocol.

40. The signal transmission method according to claim 38, wherein the time domain numbering is numbering in a chronological order or in a reverse chronological order.

41. The signal transmission method according to claim 38, wherein the frequency domain numbering is numbering in an ascending order of frequency values or in a descending order of the frequency values.

42. The signal transmission method according to claim 38, wherein the time domain numbering precedes the frequency domain numbering;
a next resource of a last frequency domain resource in a current time domain is an unnumbered resource that is closest to the last frequency domain resource in terms of both time location and frequency;
or,
indexes of frequency domain resources within a same time domain are numbered in an ascending order of frequency values or in a descending order of the frequency values.

43. The signal transmission method according to claim 38, wherein the frequency domain numbering precedes the time domain numbering;
a next resource of a last time domain resource in a current frequency domain is an unnumbered resource that is closest to the last time domain resource in terms of both frequency location and time;
or,
indexes of time domain resources within a same frequency domain are numbered in a chronological order or in a reverse chronological order.

44. The signal transmission method according to claim 32, wherein the configuration of the candidate resources comprises at least one of indexes of hybrid automatic repeat request processes of the candidate resources, and a number of the hybrid automatic repeat request processes;
wherein a type of the candidate resources is a data channel, and indexes of hybrid automatic repeat request processes of the candidate resources in the resource allocation cycle are the same;
or,
indexes of hybrid automatic repeat request processes of all configured candidate resources are the same.

45. The signal transmission method according to claim 44, wherein the indexes of the hybrid automatic repeat request processes of the candidate resources in the resource allocation cycle are the same;
the indexes of the hybrid automatic repeat request processes of the candidate resources in the resource allocation cycle are determined according to an index of a hybrid automatic repeat request process of any of: a candidate resource earliest in a time domain, a candidate resource latest in the time domain, a candidate resource with a maximum frequency, a candidate resource with a minimum frequency, a candidate resource with a maximum index and a candidate resource with a minimum index in the resource allocation cycle.

46. The signal transmission method according to claim 45, wherein the index of the hybrid automatic repeat request process of any of: the candidate resource earliest in the time domain, the candidate resource latest in the time domain, the candidate resource with the maximum frequency, the candidate resource with the minimum frequency, the candidate resource with the maximum index and the candidate resource with the minimum index in the resource allocation cycle is determined according to the locations of the candidate resources.

47. The signal transmission method according to claim 44, wherein sending the signal on the target resource comprises:
determining a target hybrid automatic repeat request process according to an index of a hybrid automatic repeat request process of the target resource; and
sending the signal on the target resource using the target hybrid automatic repeat request process.

48. The signal transmission method of claim 21, further comprising:
after sending the signal on the target resource, monitoring a feedback signal through a channel, wherein a spatial relationship of the channel is determined according to the target beam corresponding to the target resource.

49. A signal transmission apparatus, used by a station, comprising:
a first sending module, configured to send configuration information, wherein the configuration information comprises candidate resources;
a receiving module, configured to receive a signal on a target resource among the candidate resources; and
a second sending module, configured to send a feedback signal on a target beam corresponding to the target resource.

50. A signal transmission apparatus, used by a user terminal, comprising:
a selecting module, configured to select a target beam from candidate beams based on a configuration of candidate resources, a configuration of candidate beams and a configuration of a correspondence relationship between the candidate resources and the candidate beams;
a determining module, configured to determine a candidate resource corresponding to the target beam as a target resource according to the correspondence relationship; and
a third sending module, configured to send a signal on the target resource.

51. A base station, comprising the signal transmission apparatus of claim 49.

52. A user terminal, comprising the signal transmission apparatus of claim 50.

53. An electronic device, comprising:
at least one processor; and
a memory communicatively connected to the at least one processor a memory;
wherein the memory is stored with instructions executable by the at least one processor that, when executed by the at least one processor, cause the at least one processor to execute the signal transmission method of any one of claims 1 to 20, or the signal transmission method of any one of claims 21 to 48.

54. A computer-readable storage medium having computer instructions stored thereon, wherein the computer instructions are configured to cause a computer to perform the signal transmission method of any one of claims 1 to 20, or the signal transmission method of any one of claims 21 to 48.
